# EUROPEAN PATENT SPECIFICATION

(11) **EP 0 968 801 B1**
(45) Date of publication and mention of the grant of the patent: **22.01.2003**
(21) Application number: 99830266.5
(22) Date of filing: 04.05.1999
(51) Int. Cl.: B28D 1/02, B01D 21/26, B01D 37/04, B03B 9/06

(54) **A method for separating and regenerating polyethylene glycol and silicon carbide abrasive material to enable re-use thereof**
Methode zur Abtrennung und Wiedergewinnung von Polyethylenglykol und Siliziumkarbid-Schleifmittel zum Zwecke ihrer Wiederverwendung
Méthode de séperation et de régénération de polyéthylèneglycol et de materiaux abrasif à base de carbure de silicium en vue de leur réemploi

(30) Priority: 01.07.1998 IT RM980439
(43) Date of publication of application: 05.01.2000
(73) Proprietor: MEMC ELECTRONIC MATERIALS S.P.A., I-28100 Novara (IT); Garbo Servizi s.r.l., 28100 Novara (IT)
(72) Inventor: Zavattari, Carlo, 28040 Varallo Pombia (NO) (IT); Fragiacomo, Guido, 28100 Novara (IT)
(74) Representative: Taliercio, Antonio

(56) References cited:
- EP-A- 0 786 317
- EP-A- 0 826 459
- DE-A- 4 405 829
- US-A- 5 664 990
- KIRK-OTHMER: "Encyclopedia of Chemical Technology, Third Edition, Volume 10" 1980 , JOHN WILEY & SONS , NEW YORK XP002118660 * page 284 - page 297 *
- R. PERRY: "Chemical Engineers' Handbook, Fifth Edition" 1973 , MCGRAW-HILL BOOK COMPANY , NEW YORK XP002118661 * page 19-57 - page 19-59 *

## Description

This invention broadly relates to the systems for separating and regenerating glycol based exhausted abrasives and more particularly it concerns a method for separating and regenerating glycol and silicon carbide based exhausted abrasives, in order to enable re-use thereof in cutting materials such as silicon crystals for manufacture of semiconductor devices, by means of wire cutters.

As it is well known, modem electronics are wholly based upon use of crystalline silicon for manufacturing semiconductor integrated circuits. The silicon materials to be used in these processes is manufactured as big cylindrical bars which are subsequently "sliced" in order to realize the so-called "wafers" on which the desired electronic components and integrated circuits are achieved by means of precisely executed photolithographic techniques. The wafers are then further subdivided in order to realize the individual "chips".

The cutting operation of the silicon crystals, which are carried out, for instance, by employment of a wire cutter, are generally performed by using an abrasive material including as an essential component silicon carbide suspended in a suitable suspending agent, usually consisting of an oil or polyethylene glycol. Performing these operations, therefore, entails producing an exhausted abrasive work residual containing oil or polyethylene glycol and silicon carbide, which are all to be disposed.

The difference between the above mentioned suspending agents is substantial: the glycol component is completely soluble in water, while the oil component is not soluble in water: the glycol based cutting aid abrasive has a much higher viscosity than the oil based abrasive (assuming anyway that the same abrasive powder is used): namely 600-700 cps for the glycol based abrasive versus 200-250 cps for the oil based abrasive.

European Patent EP 0 786 317 relates to a system for re-use of an oil containing waste fluid comprising the steps of lowering the viscosity of the waste oily fluid containing oil and abrasive particles by addition of water; separating on a first hand the available abrasive particles and the waste liquid, which consists of a dispersed solid component and of a liquid component containing oil and water from the low viscosity oily fluid; definitively separating the three solid-liquid phases comprising the suspended solid portion, oil and water from the waste fluid. Said first separation operation is carried out by means of a hydrocyclone apparatus.

It is the broad object of this invention, to take as a starting material an exhausted abrasive material based upon polyethylene glycol, silicon carbide and silicon powder, as used for cutting silicon monocrystals, and to suggest a method for separately recovering silicon carbide and polyethylene glycol, in suitable condition for enabling re-use thereof in the silicon crystal cutting process.

The solution to this problem has a two-fold economical and environmental impact. Its economical relevance is due, in the first place, to a reduction of the raw material requirements, in particular polyethylene glycol and silicon carbide requirements. The environmental impact, which also has an economical meaning, is related to the fact that the polyethylene glycol recovery eliminates the necessity that the polyethylene glycol be disposed into the treatment plant of the waste water or that it is burnt in specially designed furnaces.

This invention, as set forth in the precharacterizing clause of claim 1, which is drafted on the base of the above mentioned European Patent, relates to a method for treating an exhausted fluid used in a process for slicing monocrystalline silicon containing a particulate abrasive material and a suspending agent, and including their separation and their regeneration for re-use, as well as silicon powder residuals comprising the steps of: a) lowering the viscosity of the exhausted fluid by addition of water; b) separating a water suspension of the available abrasive particles and a water suspension containing the silicon powder; c) drying the suspension of said abrasive particles in a furnace for recovery and re-use thereof; and d) filtering said water suspension of silicon powder in order to recover the silicon powder for subsequently drying and possibly re-using it.

It is specific object-matter of this invention, as set forth in the characterizing clause of claim 1, that said abrasive is silicon carbide and said suspending agent is polyethylene glycol (PEG) and that the method comprises the following steps:
i) before said water dilution step a), warming said exhausted abrasive fluid so as to lower its viscosity,
ii) filtering said exhausted warmed lower viscosity fluid, in order to obtain, on one hand, a wet powder agglomerate consisting of silicon carbide particles and silicon powder, said agglomerate being then subjected to said a), b), c) and d) steps, and, on the other hand, said suspending agent (PEG) which contain silicon powder,
iii) separating (decanting/filtering) said suspending agent (PEG) so as to extract pure suspending agent (PEG) intended for re-use and separating said silicon powder traces, that can be subsequently disposed or possibly re-used.

Further details and advantages of this invention will be evident from the following specification by referring to the enclosed drawings wherein the preferred embodiment is shown by way of illustration and not by way of limitation.

In the drawings:
Figure 1 shows a performance flow diagram of the method according to this invention,
Figure 2 shows a graph of the particle size distribution of the recovered silicon carbide,
Figure 3 shows a graph of the particle size distribution of the pure silicon carbide.

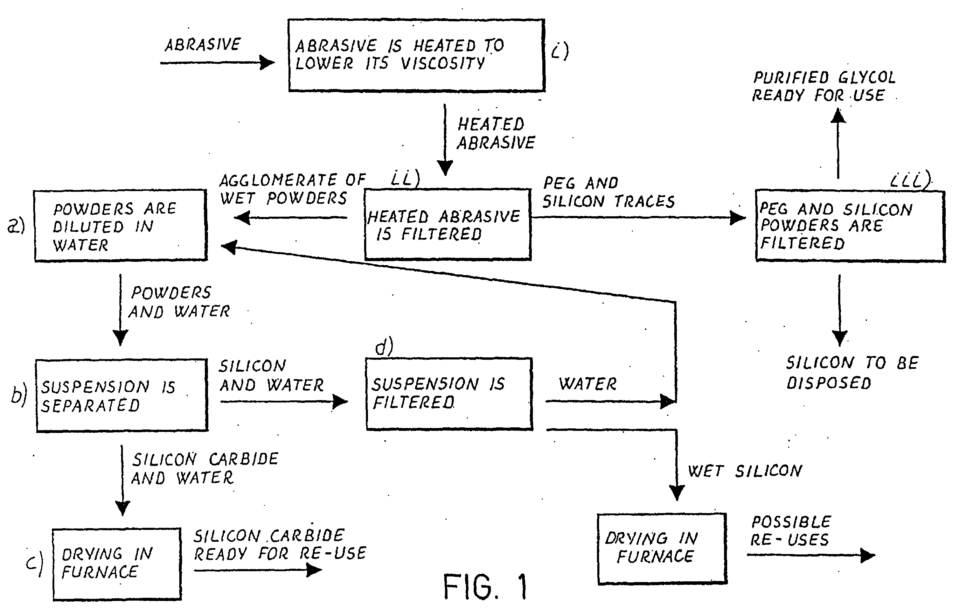

By specifically referring to Figure 1, a detailed explanation will be furnished in respect of the various steps of the method.

As it is known, the exhausted abrasive material has a viscosity figure of up to 700 cps at 20°C: this high viscosity figure prevents the abrasive material from being simply and efficiently filtered. Aiming at bypassing this drawback, this invention suggests that a heating treatment (i) of the material be effected at a temperature of about 90°C, so as to reduce its viscosity.

In these conditions, the heated abrasive material is subjected to a first filtering operation (ii) under pressure, by means of filters made of polypropylene and having a suitable and controlled viscosity value. As a product of this first filtering operation, on one hand, a clarified fraction comprising polyethylene glycol and silicon traces, and, on the other hand, a wet powder agglomerate substantially consisting of silicon and silicon carbide, are obtained.

The clarified fraction comprising polyethylene glycol and silicon traces is then transferred to a second separation step (iii) aimed at furnishing completely separated polyethylene glycol and silicon solids. This silicon residual is then passed to disposal, while the substantially purified glycol is ready for re-use.

The agglomerate comprising the silicon and silicon carbide wet powders, as obtained from the first filtering operation is then subjected to a water dilution stage (a) at the end of which a concentration of 25 g/l can be obtained. This solution is subsequently mixed and stirred in order to promote de-cohesion and separation of the silicon powder from the silicon carbide surface.

The diluted solution of silicon and silicon carbide powders in water suspension is then separated (b) in a specifically designed hydrocyclone apparatus in order to furnish a first liquid aqueous suspension of silicon and a second liquid aqueous suspension of silicon carbide. The separation of the so obtained two suspensions takes place based upon a particle size technique that, in this particular circumstance, entails the separation of the two components (silicon and silicon carbide).

The suspension of silicon powder and water is then subjected to a third filtering operation (d) that furnishes a wet silicon powder, which is dried in a furnace for enabling a possible re-use of the silicon content, and water, which is certainly re-useable.

The suspension of silicon carbide and water, on the other hand, is carefully dried in an industrial furnace (c). For optimum performances, such a furnace is provided with an internal system to keep the suspension in continuous movement condition, so as to avoid formation and growth of silicon carbide clots.

The so dried and regenerated silicon carbide contains less than 2% pure silicon and a water amount lower than the sensitivity threshold of the measurement instrument possibly utilized for measuring it. The above said two contaminant components (silicon powder and water) have no effect on the quality and re-useability of the so obtained silicon carbide, that can be directly and suitably re-used in the concerned cutting process in identical way of use as fresh silicon carbide can be used, with the above described advantages due to the particle size distribution.

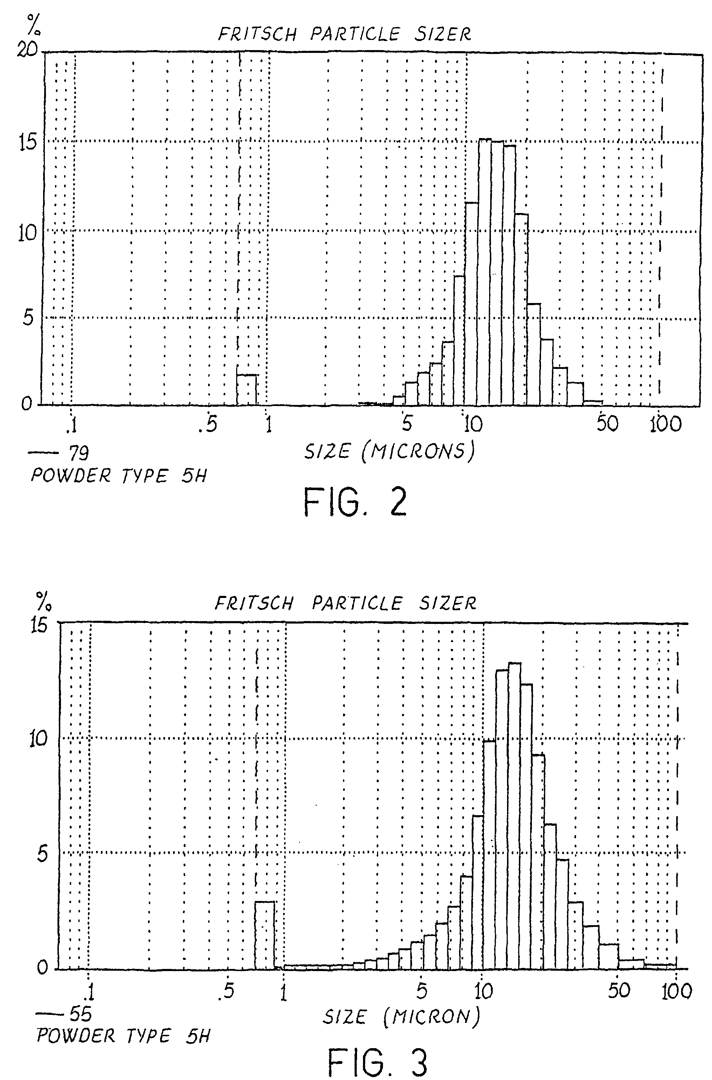

By referring to Figures 2 and 3, which show the particle size distribution of silicon carbide recovered according to this invention and of fresh silicon carbide, it can be clearly observed that the recovered silicon carbide has a narrower particle size distribution with resepct to the fresh silicon carbide and it additionally has a mean distribution value very near to fresh silicon carbide. Furthermore, it can be observed that the amount (number) of particles falling around the mean value of the recovered silicon carbide is clearly higher.

As a further and conclusive comparison between the approach according to this invention and the system as disclosed in the above mentioned European Patent EP 0 786 317, it should be underlined that the sole similarity between the two proposed approaches appears to be the utilization of a hydrocyclone apparatus for separating the abrasive powder and subsequently drying it. Regardless of the fact that the initial and final steps of the treatment method are completely different, the utilization of the hydrocyclone appartus takes place in two very different and contrasting ways: in EP 0 786 317, the abrasive material is diluted in water and conveyed to the hydrocyclone apparatus; two output liquids are obtained: a first liquid that contains abrasive powder (SiC) together with water and oil and a second liquid that contains water, oil and silicon powder. The first liquid is subjected to a drying treatment in order to obtain a dry powder. According to this invention, the abrasive component is heated and completely separated from the glycol (ii), it is subsequently diluted with water (a) and only after this dilution step it is supplied to the hydrocyclone apparatus (b), which, therefore, is absolutely never contacted by the suspending liquid. The two output liquids furnished by the hydrocyclone apparatus are a first liquid that contains water and abrasive powder (without glycol) and a second liquid that contains water and silicon powder (without glycol, too).

The preferred embodiment of this invention has been hereinbefore explained, but it should be understood that those skilled in the art can made variations and changes to the construction details, as defined in the annexed claims.

## Claims

1. A method for treating an exhausted fluid used in a process for slicing monocrystalline silicon containing a particulate abrasive material and a suspending agent, and including their separation and their regeneration for re-use, as well as silicon powder residuals comprising the steps of : a) diluting a wet powder agglomerate consisting of silicon carbide particles and silicon powder by addition of water; b) separating a water suspension of the available abrasive particles and a water suspension containing the silicon powder; c) drying the suspension of said abrasive particles in a furnace for recovery and re-use thereof; and d) filtering said water suspension of silicon powder in order to recover the silicon powder for subsequently drying and possibly re-using it,
**characterized in that** said abrasive material is silicon carbide and said suspending agent is polyethylene glycol (PEG) and **in that** it further comprises the following steps:
i) before said water dilution step a), warming said exhausted abrasive fluid so as to lower its viscosity,
ii) filtering said exhausted warmed lower viscosity fluid, in order to obtain, on one hand, said wet powder agglomerate which is subjected to said a), b), c) and d) steps, and, on the other hand, said suspending agent (PEG) which contains silicon powder,
iii) separating said suspending agent (PEG) so as to extract pure suspending agent (PEG) intended for re-use and separating said silicon powder traces, that can be subsequently disposed or possibly re-used.

2. A separation method according to claim 1, **characterized in that** said heating step is carried out at a temperature of about 90°C.

3. A separation method according to claim 1, **characterized in that** said filtering step ii) of said heated exhausted abrasive fluid is carried out by means of pressure filters, provided with filtering diaphrams of polypropylene and having suitable and controlled porosity.

4. A separation method according to claim 1, **characterized in that** said wet powder agglomerate is diluted with water up to the point at which a concentration of 25g/l is reached.

5. A separation method according to claim 1, **characterized in that** said separation step b) is carried out in a hydrocyclone apparatus based upon particle size techniques.

## Patentansprüche

1. Verfahren zur Behandlung einer erschöpften, in einem Prozess zum Zerstückeln von Monokrystallin - Silizium enthaltend ein parzelliertes Schleifmittel und ein Aufschlämmittel gebrauchten Flüssigkeit und deren Abtrennung und Rückgewinnung zur Wiederverwendung, sowie zur Behandlung von Siliziumpulverrückständen, mit folgenden Verfahrensschritten:
a) Verdünnung eines aus Siliziumkarbid-Partikeln und Siliziumpulver bestehenden Nasspulveragglomerats durch Zugabe von Wasser;
b) Abtrennung von Wasseraufschlämmung der verfügbaren Schleifmittelparikeln und von Wasseraufschlämmung des Siliziumpulvers;
c) Auftrocknen der Aufschlämmung der Scheifmittelpartikeln in einem Ofen zur deren Rückgewinnung und Wiederverwendung, und
d) Filtern der Wasseraufschlämmung des Siliziumpulvers zur Rückgewinnung und zum nachträglichen Auftrocknen und gegebenfalls zur Wiederverwendung desselben;
**dadurch gekennzeichnet dass** das Schleifmittel Siliziumkarbid ist, das Aufschlämmittel Polyäthylenglykol (PEG) ist und dass es ausserdem die folgenden Verfahrensschritte aufweist:
i) Aufwärmung der erschöpften Schleifmittel - Flüssigkeit von dem Verdünnungschritt a) um deren Viskosität zu erniedrigen;
ii) Filtern der erschöpften aufgewärmten niederviskosen Flüssigkeit zur Erhaltung des vorgenannten an die verfahrensschritte a), b), c) und d) unterworfenen Nasspulveragglomerats, einerseits, und des Siliziumpulver enthaltenden Aufschlämmittels, anderseits;
iii) Abtrennung des vorgenannten Aufschlämmittels (PEG) zur Erhaltung des reinen Aufschlämmittels (PEG), das Wiederverwendet werden soll und Abtrennung der vorgenannten Siliziumpulverspuren, die nachträglich aufbewahrt und gegebenfalls wiederverwendet werden können.

2. Abtrennungsverfahren nach Anspruch 1, **dadurch gekennzeichnet, dass** der vorgenannte Erwärmungsschritt bei einer Temperatur von etwa 90°C durchgeführt wird.

3. Abtrennungsverfahren nach Anspruch 1, **dadurch gekennzeichnet, dass** das Filternschritt ii) der genannten erschöpften erwärmten Schleifmittelflüssigkeit vermittels Druckfilter durchgeführt wird, die mit Filtermembranen aus Polypropylen mit angebrachter und steuerbarer Porosität versehen sind.

4. Abtrennungsverfahren nach Anspruch 1, **dadurch gekennzeichnet, dass** das vorgenannte Nasspulveragglomerat mit Wasser bis zum Erreichen einer Konzentration von 25 g/l aufgeschlämmt wird.

5. Abtrennungsverfahren nach Anspruch 1, **dadurch gekennzeichnet, dass** der Abtrennungsschritt b) in einem auf der Partikelgrösse - Technik basierten Hydrozyklon-Apparat durchgeführt wird.

## Revendications

1. Procédé de traitement d'une liquide épuisé, utilisé dans un procédé pour emietter de silicium monocrystallin contenant des particules de matériel abrasif et un moyen de suspension et comprenant leur séparation et régénération et réemploi, ainsi que des résiduels de poudre de silicium, comprenant les phase de:
a) dilution d'un aggloméré de poudres humide consistant des particules de carbure de silicium et de poudre de silicium par addition de l'eau;
b) séparation d'une suspension aqueuse des particules abrasives disponibles et d'une suspension aqueuse contenant des poudres de silicium;
c) séchage de la suspension desdites particules abrasives dans un four pour la récupération et le réemploi des mêmes et
d) filtration dedite suspension acqueuse des poudres de silicium pour la récupération de poudre de silicium et le séchage succesif et possible réemploi de la même;
**caractérisé en ce que** ledit materiel abrasif est carbure de silicium et ledit moyen de suspension est glycol polyéthylènique (PEG) et **en ce qu'**il comprend en outre les phases suivantes:
i) chaufage dedite liquide abrasif épuisé avant ladite phase de dilution a) pour reduir sa viscosité;
ii) filtration dudit liquide épuisé chaufé ayant une basse viscosité pour obtenir ledit aggloméré de poudres humide qui est sommis à ledites phases a), b), c) et d), d'un côté, et dedit moyen de suspension (PEG) contenant le poudre de silicium, de l'autre côté;
iii) séparation dudit moyen de suspension pour extrair le moyen de suspension (PEG) destiné à être réutilisé et séparation dedites traces de poudre de silicium, qui peuvent être successivement conservées et si possiblement réutilisées.

2. Procédé de séparation selon la revendication 1, **caractérisé en ce que** la phase di chaufage est réalisée à une température près de 90°C.

3. Procédé de séparation selon la revendication 1, **caractérisé en ce que** ladite phase de filtration ii) dedit liquid épuisé chaulé abrasif est réalisée au moyen de filtres à pression, munis de diaphragmes de polypropylène ayant une porosité appropriée est controlée.

4. Procédé de séparation selon la revendication 1, **caractérisé en ce que** ledit aggloméré de poudres humide est dilué avec de l'eau jusqu'à atteindre une concentration de 25 g/l.

5. Procédé de séparation selon la revendication 1, **caractérisé en ce que** ladite phase de séparation est réalisée dans un appareil à hydrocyclone basé sur la technique de dimension de particles.
